Europäisches Patentamt

European Patent Office

Office européen des brevets

(19)

(11) **EP 0 735 698 A2**

(12) **EUROPEAN PATENT APPLICATION**

(43) Date of publication:
02.10.1996 Bulletin 1996/40

(51) Int. Cl.$^6$: **H04B 1/38**

(21) Application number: 96105061.4

(22) Date of filing: 29.03.1996

(84) Designated Contracting States:
**DE FR GB IT NL SE**

(30) Priority: 29.03.1995 JP 71019/95

(71) Applicant: **NEC CORPORATION**
**Tokyo (JP)**

(72) Inventors:
• **Miyashita, Toshikazu,**
**c/o NEC Corporation**
**Tokyo (JP)**
• **Yokota, Hidetsugu,**
**c/o NEC Saitama, Ltd.**
**Kamikawamachi, Kodama-gun, Saitama (JP)**

(74) Representative: **VOSSIUS & PARTNER**
**Siebertstrasse 4**
**81675 München (DE)**

(54) **Portable telephone set of a foldable type with earphone jumping up from telephone housing upon unfolding the telephone set**

(57) A portable telephone set of a foldable type comprises a first housing (1) containing microphone unit (4), a second housing (2) containing an earphone unit (7) and having an antenna (8) projected upwardly, and a hinge portion (3) connecting the first and the second housings (1, 2) in foldable and unfoldable condition. In order to separate the antenna (8) from a user's head, the earphone unit (7) is movably attached to the second housing (2), on one hand, to be retracted into the second housing (2) when the first and the second housings (1, 2) are folded together and, on the other hand, to jump up from the second housing (2) within a limited distance when the first and the second housings (1, 2) are unfolded.

FIG. 2

EP 0 735 698 A2

## Description

This invention relates to a wireless telephone set and, in particular, to an improvement in such a wireless telephone set of a portable type to reduce unfavorable affection against an antenna gain by the head of a user of the telephone set.

In the restless modern world, portable telephone sets become more and more widely used. The conventional portable telephone sets are classified in structure into two major groups. Each telephone set belonging to a first group comprises a single housing. On the other hand, each telephone set belonging to a second group is of a foldable type and comprises a pair of housings connected through a hinge portion so as to be rotatable around the hinge portion.

In a typical portable telephone set of a foldable type, one housing is provided with a telephone microphone or telephone transmitter (hereinafter simply referred to as a microphone) while the other housing is provided with a telephone earphone or telephone receiver (hereinafter simply referred to as an earphone). With this structure, a positional relationship between the two housings can be adjusted to locate the earphone and the microphone in the vicinity of the ear and the mouth of a user, respectively, when he uses the portable telephone set.

Each of the housings has a confronting surface to be faced to a similar confronting surface of the other housing when the telephone set is folded. The microphone, the earphone, and key pads such as number entry keys are arranged on the confronting surfaces. By folding the telephone set while it is not used, these components are protected from unfavorable contact with something in an external environment.

On the other hand, in the portable telephone set comprising a single housing, the positional relationship between the microphone and the earphone can not be adjusted as desired by the user. In addition, the microphone, the earphone, and the key pads are always exposed to the external environment.

In either of the conventional portable telephone sets described above, an antenna is protruded from a top surface of the housing provided with the earphone. When the user uses the portable telephone set, the antenna is extended upward in close proximity of the head of the user. Under the influence of the human body, an antenna gain is inevitably decreased.

In order to solve the above-mentioned problem, proposal is made of an improved portable telephone set capable of separating the antenna and the user's head. Such an improved portable telephone set is disclosed, for example, in Japanese Unexamined Patent Publication No. 38461/1995 (hereinafter referred to as Reference 1) and in Japanese Unexamined Patent Publication No. 74807/1995 (hereinafter referred to as Reference 2).

In Reference 1, a first unit provided with an earphone is rotatably supported by a second unit provided with a microphone. An antenna is formed on the second unit provided with the microphone.

When the portable telephone set disclosed in Reference 1 is used, the first unit provided with the earphone is inclined to form a particular angle with respect to an extending direction of the antenna. With this structure, when the portable telephone set in Reference 1 is used with the earphone and the microphone located in the vicinity of the ear and the mouth of the user, respectively, the antenna is extended in a diverging direction away from the head of the user. Thus, the portable telephone set disclosed in Reference 1 is capable of reducing an interference against a radio wave by increasing a distance between the antenna and the user's head.

In the portable telephone set in Reference 1, however, the antenna is extended in the diverging direction away from the head of the user, namely, deviated from a direction straight upward from the head. As a result, the antenna may possibly be put into contact with something present in the surroundings. In order to avoid the above-mentioned problem, the user must pay close attention to assure that the antenna, particularly in its top end, is not brought into unfavorable contact with something.

On the other hand, in the portable telephone set disclosed in Reference 2, the earphone is rotatable around a part of the housing provided with the microphone. This makes it possible to protrude the earphone apart from the housing provided with the microphone. When the portable telephone set of Reference 2 is used with the earphone located in the vicinity of the ear of the user, the antenna is relatively separated from the head of the user. It is therefore possible to reduce such an interference against transmission/reception of a radio wave that is caused by the user's head present in close proximity of the antenna.

In the above-mentioned conventional portable telephone set of Reference 2, an additional operation or an additional mechanism is required in order to protrude the earphone apart from the housing. Such an additional operation (for example, drawing the earphone out of the housing) is troublesome for the user to perform. On the other hand, provision of the additional mechanism results in an increase in cost of the telephone set.

It is a first object of this invention to provide a portable telephone set of a foldable type with an increased distance kept between an antenna and a part (for example, the head) of a user's body when the telephone set is used.

It is a second object of this invention to provide a portable telephone set of a foldable type which is capable of achieving, the above-mentioned first object and which has a structure such that an antenna is extended in a direction substantially straight upward from the head of a user.

It is a third object of this invention to provide a portable telephone set of a foldable type capable of making an earphone jump up from a housing by simply unfolding the telephone set without any additional operation and any complicated mechanism for separating an antenna from the head of a user.

According to this invention, a portable telephone set of a foldable type comprises a first housing with a microphone unit contained therein, a hinge portion supporting one side of the first housing, a second housing having one side supported by the hinge portion so that the second housing is rotatable around the hinge portion within a movable range defined by the hinge portion to be unfolded and folded with respect to the first housing, an earphone unit mounted in the second housing to be exposed outside through a confronting surface of the second housing to be faced to that of the first housing when the first and the second housings are folded, the earphone unit being retracted and received in the second housing when the first and the second housings are folded, the earphone unit partially projecting from the second housing when the first and the second housings are unfolded, and an antenna fixed on a side surface of the second housing that is located opposite to another side surface adjacent to the hinge portion.

In the portable telephone set of a foldable type having the above-mentioned structure, the earphone unit jumps up from the housing in a direction away from the antenna when the portable telephone set is used or unfolded. In addition, the antenna is extended in a direction substantially straight upward from the head of a user. Accordingly, the antenna is undesiredly brought into contact with something around the head of the user with a reduced possibility.

In the portable telephone set of a foldable type having the above-mentioned structure, the earphone unit automatically jumps up from the housing when the user unfolds the portable telephone set. Accordingly, the user need not perform an additional operation for protruding the earphone unit.

In the portable telephone set of a foldable type having the above-mentioned structure, no gap is formed between the housing and the earphone unit when the earphone unit jumps up from the housing. Accordingly, maintenance work is less troublesome as compared with a portable telephone set in which such a gap is produced.

Fig. 1 is a side view of a portable telephone set according to a first embodiment of this invention in an unfolded state;

Fig. 2 is a front view of the portable telephone set illustrated in Fig. 1;

Fig. 3 is a perspective view of the portable telephone set according to the first embodiment of this invention in a folded state;

Fig. 4 is an enlarged schematic sectional view of a part of the portable telephone set according to the first embodiment of this invention for describing a first stage of a folding operation;

Fig. 5 is a view similar to Fig. 4 for describing a second stage of the folding operation;

Fig. 6 is a view similar to Fig. 4 for describing a final stage of the folding operation;

Fig. 7 is a schematic view for illustrating a requirement for smoothly pushing the earphone unit into the upper housing during the folding operation of the lower housing onto the upper housing;

Fig. 8 shows a configuration of an earphone unit of the portable telephone set according to the first embodiment of this invention and a geometrical relationship among the earphone unit, a first housing (lower housing), and a second housing (upper housing) of the portable telephone set;

Fig. 9 is a view similar to Fig. 8 for describing another configuration of the earphone unit and the geometrical relationship;

Fig. 10 is a view similar to Fig. 8 for describing still another configuration of the earphone unit and the geometrical relationship;

Fig. 11 is a view similar to Fig. 8 for describing yet another configuration of the earphone unit and the geometrical relationship;

Fig. 12 is a view similar to Fig. 8 for describing another configuration of the earphone unit and the geometrical relationship;

Fig. 13 shows a spring arranged inside the second housing (upper housing) of the portable telephone set according to the first embodiment of this invention;

Fig. 14 shows a spring arranged inside a second housing (upper housing) of a portable telephone set according to a second embodiment of this invention;

Fig. 15 is a side view of a portable telephone set according to the third embodiment of this invention in an unfolded state;

Fig. 16 is a front view of the portable telephone set illustrated in Fig. 15;

Fig. 17 is a sectional view taken along a line 17-17 in Fig. 16 for describing a relationship between key pads and a first housing (lower housing) of the portable telephone set according to the third embodiment of this invention; and

Fig. 18 is a schematic perspective view of a part of an earphone unit of the portable telephone set according to the third embodiment of this invention.

At first in overview, a portable telephone set of a foldable type according to this invention comprises a first or lower housing and a second or upper housing connected through a hinge portion. When the lower and the upper housings are unfolded around the hinge portion, an earphone unit jumps up from the upper housing.

When the lower and the upper housings are folded around the hinge portion, the earphone unit having jumped up is pushed by the lower housing and received in the upper housing.

Throughout the specification, the term "earphone unit" represents a combination of the earphone and an earphone case in which the earphone is contained. The "earphone" represents an electromechanical transducer for converting an electric signal into a mechanical action.

Likewise, the term "microphone unit" represents a combination of a microphone and a microphone case in which the microphone is received. The "microphone" represents an electromechanical transducer for converting a mechanical action into an electric signal.

The term "confronting surface" is used to represent a surface of each housing to be faced to that of the other housing when the housings are folded.

Keeping the above in mind, this invention will be described in detail in conjunction with several preferred embodiments thereof.

First Embodiment

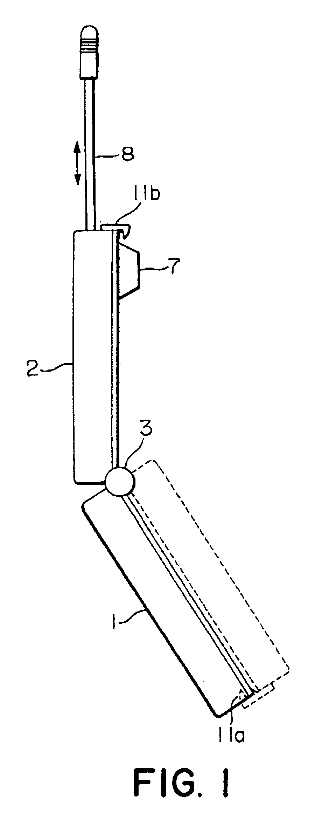

A portable telephone set of a foldable type according to a first embodiment of this invention has a structure shown in Figs. 1 through 3.

Referring to Figs. 1 through 3, the portable telephone set comprises a first or lower housing 1 which has a rectangular shape, a second or upper housing 2 which has a rectangular shape, and a hinge portion 3 supporting one side of each of the lower and the upper housings 1 and 2.

The lower housing 1 has a confronting surface to be faced to that of the upper housing 2 when the lower and the upper housings 1 and 2 are folded. The confronting surface of the lower housing 1 is provided with a microphone unit 4 for picking up a voice of a user or an environmental sound and a key portion 5 for the user to manipulate upon carrying out transmitting/receiving operations by the portable telephone set.

More specifically, the microphone unit 4 comprises a microphone (not shown) arranged inside the lower housing 1 and a plurality of apertures formed in the confronting surface to effectively transmit the voice of the user or the environmental sound to the microphone. The key portion 5 has a plurality of key pads 51 contained in the lower housing 1 and exposed outside through the confronting surface.

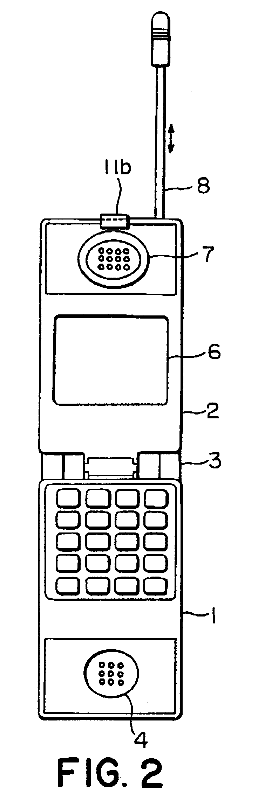

The upper housing 2 also has a confronting surface to be faced to the lower housing 1 when the lower and the upper housings 1 and 2 are folded. The upper housing 2 has a display portion 6 disposed on the confronting surface for displaying information relating to transmission/reception through the portable telephone set, an earphone unit 7 for reproducing a reception sound, an antenna 8 extending from a top surface (at the top in Figs. 1 and 2) of the upper housing 2, and a stopper 11.

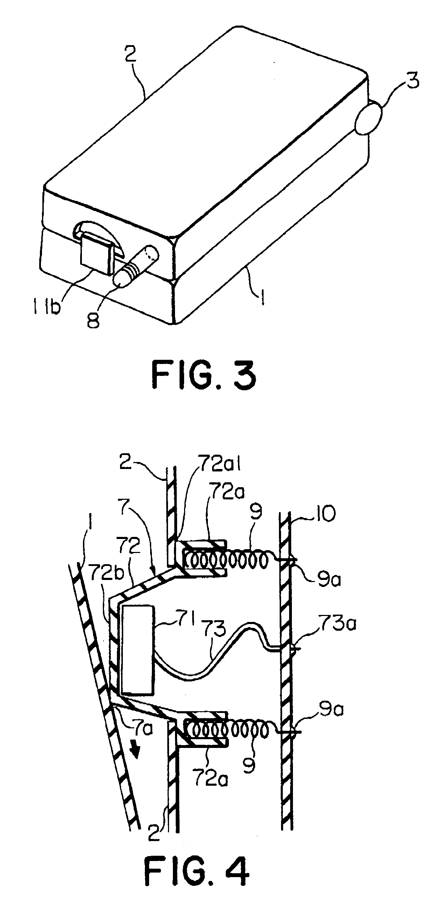

Referring to Figs. 4 through 6, description will be made in detail as regards the earphone unit 7 which constitutes a characterizing part of this invention.

The earphone unit 7 comprises an earphone 71 arranged inside, an earphone case 72 containing the earphone 71 and having an earphone unit top surface 72b (depicted by a vertical line drawn at a right end of the earphone unit 7 in Fig. 1) to be brought into contact with the lower housing 1 when the lower and the upper housings 1 and 2 are folded, and a plurality of apertures formed in the earphone unit top surface 72b to effectively reproduce the reception sound from the earphone.

More specifically, the earphone case 72 is provided with an elastic member receiving portion 72a of a U shape formed inside the upper housing 2. Because the elastic member is a spring 9 in this embodiment, the elastic member receiving portion 72a will hereinafter be referred to as the spring receiving portion. The spring receiving portion 72a also serves as a stopper for inhibiting the earphone unit 7 from outwardly protruding beyond a predetermined position when the earphone unit 7 (namely, the earphone case 72) is forced by elastic force of the spring 9 to jump up from the upper housing 2. The earphone 71 is connected through a wire 73 to a printed circuit board 10 having a telephone electric circuit (not shown). The spring 9 has one end received within the spring receiving portion 72a and the other end fixed to the printed circuit board 10. In this first embodiment, the spring 9 and the wire 73 are fixed to the printed circuit board 10 through soldered parts 9a and 73a, respectively.

When the lower and the upper housings 1 and 2 are unfolded, the earphone unit 7 jumps up from the upper housing 2. With this structure, when the user uses the portable telephone set, the antenna 8 is separated from the head of the user. The earphone unit 7 has a tapered shape. Specifically, the earphone unit top surface 72b at the top of the earphone unit 7 is smaller in area than a cross section of the earphone unit 7 at a level flush with the confronting surface of the upper housing 2 in the state illustrated in Fig. 4. In addition, the earphone unit 7 is supported in the upper housing 2 so as to be movable in a vertical direction in Fig. 2. Specifically, the earphone unit 7 has a unit axis extending in a direction (horizontal direction in Fig. 2) perpendicular to the confronting surface of the upper housing 2 when the earphone unit 7 jumps up from the upper housing 2 to a maximum height. The earphone unit 7 is supported inside the upper housing 2 so that the unit axis is inclined with respect to the above-mentioned direction during a folding operation of the lower and the upper housings 1 and 2. As will later be described, the earphone unit 7 automatically jumps up from the upper housing 2 to a predetermined position when the lower and the upper housings 1 and 2 are unfolded.

When the lower and the upper housings 1 and 2 are folded, the earphone unit 7 is pushed into and received inside the upper housing 2. The operation of receiving the earphone unit 7 in the upper housing 2 is achieved by a pressure applied by the lower housing 1 to the earphone unit 7 when the lower and the upper housings 1 and 2 are folded. Obviously, the earphone unit 7 has a dimension receivable within the upper housing 2.

The antenna 8 is fixed on the top surface of the upper housing 2. The top surface is a surface located uppermost when the telephone net is used. The antenna 8 is extendable and retractable as depicted by a double-headed arrow in Figs. 1 and 2. Specifically, the antenna 8 is separated from the users head and extends upward along the user's head when the portable telephone set is used.

The lower housing 1 is provided with a groove 11a while the upper housing 2 is provided with a hook lever 11b formed on the top surface thereof. When the lower and the upper housings 1 and 2 are folded, the groove 11a and the hook lever 11b are engaged with each other so as to maintain the folded state. Thus, a combination of the groove 11a and the hook lever 11b forms the stopper 11 which is implemented by a simple mechanism known in the art. Specifically, in the embodiment illustrated in Figs. 1 through 3, the upper housing 2 is provided with a generally semi-elliptical notch around the hook lever 11b so that a part of the hook lever 11b is located in the notch. When that part of the hook lever 11b is pushed downward in Figs. 1 and 2, the hook lever 11b is rotated around one side of the top surface of the upper housing 2. When the hook lever 11b is no longer pushed down, the hook lever 11b is elastically returned to its initial state by itself.

In this embodiment, the lower and the upper housings 1 and 2 are rotatable around the hinge portion 3 within a movable range defined by the hinge portion 3 to be unfolded and folded. The lower and the upper housings 1 and 2 are provided with the microphone unit 4 and the earphone unit 7, respectively. When the user uses the portable telephone set, the microphone unit 4 and the earphone unit 7 are adjustably positioned in the vicinity of the mouth and the ear of the user, respectively.

In this embodiment, the microphone unit 4, the earphone unit 7, and the key portion 5 are formed on the confronting surfaces of the lower and the upper housings 1 and 2 (Fig. 2). With this structure, these components are protected from unfavorable contact with something in an environment by folding the two housings when the portable telephone set is not used.

In this embodiment, when the lower and the upper housings 1 and 2 are unfolded, the earphone unit 7 jumps up from the upper housing 2 so that the antenna 8 is separated from the earphone unit top surface 72b. When the portable telephone set is used, the earphone unit top surface 72b is located in the vicinity of the user's ear and the antenna 8 is in turn separated from the user's head. Thus, an unfavorable influence of the user's head against the antenna gain of the antenna 8 is reduced.

In this embodiment, when the portable telephone set is used, the antenna 8 is extended substantially straight upward along the user's head. This reduces a possibility of unfavorable contact between the antenna 8 and something around the user's head.

In this embodiment, when the lower and the upper housings 1 and 2 are unfolded, the earphone unit 7 is forced by elastic force of the spring 9 to automatically jump up from the upper housing 2. Therefore, any special operation is required to make the earphone unit 7 jump up. On the other hand, when the lower and the upper housings 1 and 2 are folded, the earphone unit 7 is applied with a pressing force from the lower housing 1 to be automatically received inside the upper housing 2. Again, any special operation is required to receive the earphone unit 7 inside the upper housing 2. As described, the earphone unit 7 is made to jump up from the upper housing 2 by the use of the elastic force of the spring 9. Thus, no complicated mechanism is required at all.

In this embodiment, the spring receiving portion (elastic member receiving portion) 72a also serves as the stopper to avoid excessive protrusion of the earphone unit 7 which jumps up from the upper housing 2. Alternatively, an independent stopper may be separately formed.

Next referring to Figs. 4 through 6, description will proceed to the operation of receiving the earphone unit 7 inside the upper housing 2 in the portable telephone set according to this embodiment.

At first referring to Fig. 4, the lower housing 1 is put into initial contact with the earphone unit 7 at a first point 7a upon start of the folding operation of the lower and the upper housings 1 and 2. When the lower housing 1 is further moved to approach the upper housing 2 with the progress of the folding operation, the earphone unit 7 is applied at the first point 7a with the pressing force from the lower housing 1 in a direction perpendicular to the confronting surface of the lower housing 1. As the lower housing 1 is inclined with respect to the upper housing 2 in this state, the pressing force from the lower housing 1 is decomposed into a vertical component and a horizontal component with respect to the confronting surface of the upper housing 2. In order to successfully push and move the earphone unit 7 into the upper housing 2, the vertical component must be greater than the horizontal component. This is achieved by a design where the contact of the confronting surface of the lower housing 1 with the earphone unit 7 is started after an angle between, the confronting surfaces of the upper and the lower housings 1 and 2 becomes 45° during the unfolding operation.

In the embodiment illustrated in the Figs. 4 through 6, the earphone unit top surface 72b is parallel to the confronting surface of the upper housing 2. With this structure, the first point 7a is a point on the earphone unit top surface 72b nearest to the hinge portion 3 (downward in Fig. 4).

When the first point 7a is applied with the pressing force from the lower housing 1, the earphone unit 7 is rotated around a point 72a1 on the spring receiving portion 72a and gradually received in the upper housing 2 at first from its lower side.

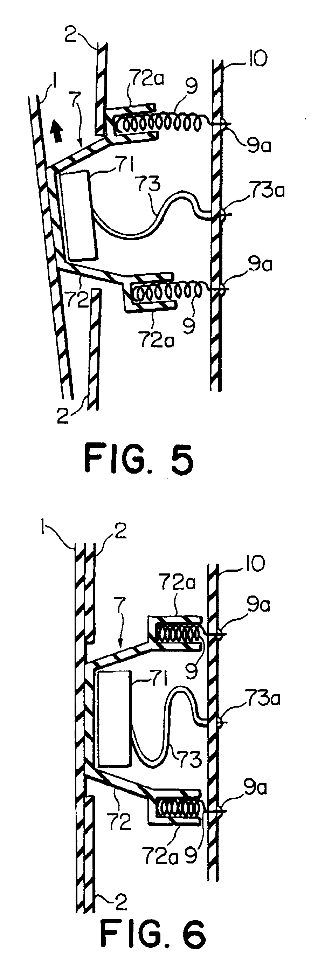

When the earphone unit 7 is rotated around the point 72a1, the first point 7a is moved on the confronting surface of the lower housing 1 towards the hinge portion 3 (in a direction depicted by an arrow in Fig. 4). After the movement, an angle formed between the confronting surface of the lower housing 1 and the earphone unit top surface 72b becomes equal to 0°. In other words, the confronting surface of the lower housing 1 and the earphone unit top surface 72b are brought into contact with each other. With a further progress of the folding operation, the pressing force from the lower housing 1 is applied in a direction perpendicular to the earphone unit top surface 72b. At this time, the point 72a1 is released from contact with an internal surface of the upper housing 2 to move towards the inner portion of the upper housing 2. Simultaneously, an entirety of the earphone unit 7 is started to be received in the upper housing 2. With a still further progress of the folding operation from the state illustrated in Fig. 5, the earphone unit top surface 72b is moved on the confronting surface of the lower housing 1 in a direction (depicted by an arrow in Fig. 5) away from the hinge portion 3.

The lower housing 1 is made to further approach the upper housing 2 with the progress of the folding operation until the confronting surfaces of the lower and the upper housings 1 and 2 are finally coupled to each other, namely, the lower and the upper housings 1 and 2 are completely folded. At this time, the earphone unit top surface 72b reaches a predetermined position on the confronting surface of the lower housing 1.

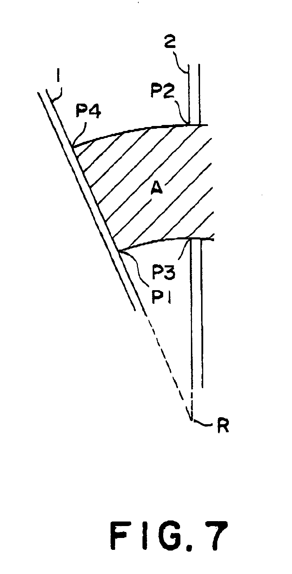

Upon carrying out the above-mentioned operation, it is important that the vertical component of the pressing force from the lower housing 1 must be greater than the horizontal component thereof, as described above. Further, the following relationship should be achieved in order to smoothly push the earphone unit 7 into the upper housing 2 which is described in Fig. 7.

Turning to Figs. 7 through 12, description will be made as regards the above-mentioned relationships in conjunction with various configurations and/or orientations of the earphone unit 7 by way of example.

Figs. 7 through 12 are schematic sectional views taken in a vertical direction in Fig. 1 and at the center of the earphone unit 7 where it has a longest dimension in the vertical direction in Fig. 2.

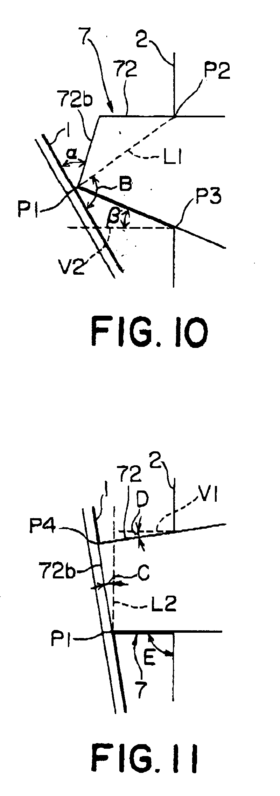

Referring to Fig. 7, it is provided that the earphone unit 7 has a maximum vertical dimension (in Fig. 7), that is, the earphone unit top surface 72b has a dimension (P1-P4) equal to the vertical size (P2-P3) of a window in the confronting surface of the upper housing 2. When the lower housing 1 is moved to be folded onto the upper housing 2, the confronting surface of the lower housing 1 is brought into face-to-face contact with the earphone unit top surface 72b, as shown in Fig. 7, directly or after the confronting surface of the lower housing 1 is firstly brought into contact with an upper end point P4 or a lower end point P1 of the earphone unit top surface 72b. In the condition of Fig. 7, points P2 and P4 must be on an arc of a circle having a radius of P2-R, and points P1 and P3 must be on another arc of a circle having a radius of P3-R, where R is a central axis of the hinge portion 3, in order that the earphone unit can be smoothly pushed into the upper housing 2. In other words, the possible maximum dimension of the earphone unit is limited within an area A hatched in Fig. 10.

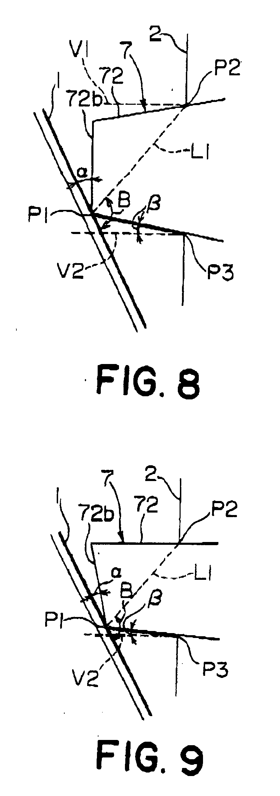

Now, in various specific conditions of the earphone unit 7 and the lower and upper housings 1 and 2, description will be made as to relationship of them, referring to Figs. 8 through 12.

Referring to Fig. 8, the earphone unit top surface 72b is parallel to the confronting surface of the upper housing 2. The earphone unit 7 is brought into contact with the confronting surface of the lower housing 1 at first at the point P1 on the earphone unit top surface 72b nearest to the hinge portion 3 during the folding operation of the lower and the upper housings 1 and 2. In the first condition, it is provided that an imaginary line L1 is a connection line extending from the point P1 to the upper contact point P2 between an upper side surface (in the figure) of the earphone unit 7 and the confronting surface of the upper housing 2, imaginary lines V1 and V2 being a line extending from the upper contact point P2 in a direction perpendicular to the confronting surface of the upper housing 2, and a line extending in a direction perpendicular to the confronting surface of the upper housing 2 from a lower contact point P3 between a lower side surface (in the figure) of the earphone unit 7 and the confronting surface of the upper housing 2, respectively. It is further provided that an angle B is made by the confronting surface of the lower housing 1, an angle E being formed by the lower side surface of the earphone unit 7 and the confronting surface of the upper housing 2 in the area nearer to the hinge portion 3, and the imaginary line L1, another angle $\alpha$ being made by the earphone unit top surface 72b and the confronting surface of the lower housing 1, while another angle $\beta$ being made by the lower side surface of the earphone unit 7 and the imaginary line V2.

Under the provisions, in order to satisfy the requirement for smoothly pushing the earphone unit 7 into the upper housing 2, the following two relationships should be achieved. The first relationship is that the angle B is equal to or greater than 90°. This relationship assures that the pressing force from the lower housing 1 is directed to a certain point between the points P2 and P3. Therefore, the earphone unit 7 is rotated about point P2 in not the clockwise direction but the counter clockwise direction in the figure.

The second relationship is that the angle $\alpha$ is equal to or smaller than twice ($2\beta$) the angle $\beta$. The angles $\alpha$ and $\beta$ must be formed in a clockwise direction in the figure from the confronting surface of the lower housing 1 and from the imaginary line V2, respectively. In the relationship, the lower side surface of the earphone unit 7 does never move into a lower area (in the figure) in the same side of the hinge portion 3 with respect to the imaginary line V2 even after the earphone unit 7 is being pushed into the upper housing 2 by the lower housing 1 during a further folding operation.

The same two relationships must be satisfied for assuring the earphone unit 7 to be smoothly received in the upper housing 2 by the folding operation, in either cases that the earphone unit top surface 72b is inclined towards the upper housing 2 in the direction of the hinge portion 3 as shown in Fig. 9 and that the earphone unit top surface 72b is inclined towards the upper housing 2 in the direction opposite to the hinge portion 3 as shown in Fig. 10.

Referring to Fig. 11, when the earphone unit 7 is brought into face-to-face contact with the confronting surface of the lower housing 1 in the overall earphone unit top surface 72b during the folding operation, the earphone unit 7 slides along the confronting surface of the lower housing 1 upwardly in the figure by progress of the folding operation.

Under the condition, the following two relationships should be satisfied for assuring the smooth movement of the earphone unit 7 into the upper housing 2 by the further folding operation. The first relationship is that the angle E must be equal to or greater than 90° . The angle E equal to or greater than 90° means that the lower side surface of the earphone unit 7 does never move into the area nearer to the hinge portion 3 with respect to the imaginary line V2.

The second relationship is that an angle D is equal to or larger than a half (C/2) of another angle C as shown in Fig. 11. The angle D is made by the upper side surface of the earphone unit 7 and the vertical line V1. The angle C is made by the confronting surface of the lower housing 1 and a line L2 extending from the point P1 in parallel to the confronting surface of the upper housing 2. The second relationship means that the upper side surface of the earphone unit 7 does never move into the upper area with respect to the imaginary line V1 even by further progress of the folding operation.

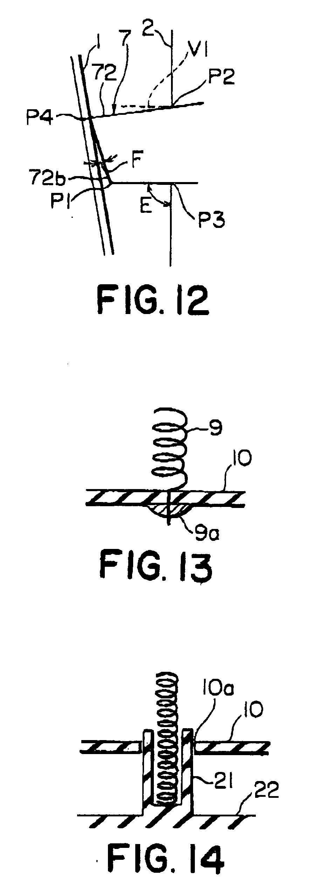

Referring to Fig. 12, description will be made as regards a case where the earphone unit 7 is brought into contact with the confronting surface of the lower housing 1 at first at a point P4 on the earphone unit top surface 72b farthest from the hinge portion 3 when the lower and the upper housings 1 and 2 are folded, by the fact that the earphone unit top surface 72b is inclined towards the upper housing 2, more steeply than in Fig. 9, as it approaches the hinge portion 3. In the case, the earphone unit 7 slides along the confronting surface of the lower housing 1 upwardly in the figure by progress of the folding operation.

In the case, the following relationship must be satisfied for the earphone unit 7 to be smoothly moved into the housing by progress of the folding operation.

The relationship is that the angle E is equal to or larger than an angle of (90° - F/2). The angle F is made by the confronting surface of the lower housing 1 and the earphone unit top surface 72b. The second relationship means that the upper side surface of the earphone unit 7 does never move into the upper area with respect to the imaginary line V1 even by further progress of the folding operation.

When the folding operation progresses from the condition of Fig. 12 to the condition of Fig. 11, it will be understood that the two relationships described in connection with Fig. 11 should be satisfied.

On the other hand, as far as the relationships described in conjunction with Figs. 7 through 12 are satisfied, the earphone unit 7 jumps up from the upper housing 2 when the lower and the upper housings 1 and 2 are unfolded. Although not illustrated in Figs. 7 through 12 for simplicity of illustration, the earphone unit 7 has the spring receiving portion 72a within the upper housing 2. Accordingly, the earphone unit 7 jumping up from the upper housing 2 is thereby stopped at the predetermined position.

Returning to Figs. 4 through 6, taking jump-up of the earphone unit 7 into consideration, the length of the wire 73 is appropriately selected so that the wire 73 is not broken to cause interruption between the earphone 71 and the printed circuit board 10 when the lower and the upper housings 1 and 2 are unfolded and folded.

Returning to Figs. 1-3, the groove 11a and the hook lever 11b are not essential in relation to the elastic force of the spring 9, rotatability of the hinge portion 3, the weight of the lower housing 1, and so on. The groove 11a and the hook lever 11b are fully effective in case where: (1) the elastic force of the spring 9 is sufficiently strong, (2) the hinge portion 3 is readily rotated, and (3) the lower housing 1 containing internal circuits has a relatively light weight. In absence of the groove 11a and the hook lever 11b under these conditions, the lower and the upper housings 1 and 2 are spontaneously unfolded and the earphone unit 7 is allowed to jump up even when the lower and the upper housings 1 and 2 are folded. On the other hand, in presence of the groove 11a and the hook lever 11b, the groove 11a and the hook lever 11b are engaged with each other upon folding the lower and the upper housings 1 and 2 to thereby maintain the folded state. This prevents the lower and the upper housings 1 and 2 from being undesirably unfolded. Under the similar conditions, when a part of the hook lever 11b in the notch is pushed towards the hinge portion 3 in order to unfold the lower and the upper housings 1 and 2, the earphone unit 7 elastically jumps up from the lower housing 2. Since the hinge portion 3 is easy to rotate and the lower housing 1 has a relatively light weight, the portable telephone set according to this invention is automatically turned into a usage mode because the earphone unit 7 pushes up the lower housing 1 when the earphone unit 7 jumps up.

Second Embodiment

A portable telephone set of a foldable type according to a second embodiment of this invention is different from that of the first embodiment in a manner of fixing the spring 9 inside the upper housing 2. In the above-mentioned first embodiment, the spring 9 is fixed at its one end to the printed circuit board 10 through the soldered part 9a as illustrated in Fig. 13. In the second embodiment, the spring 9 is fixed in a different manner.

Referring to Fig. 14, the printed circuit board 10 is provided with a guide hole 10a. Within the upper housing 2, a second spring receiving portion 21 is formed on an inner surface of a rear wall 22 opposite to a front wall having the confronting surface and receives the other end of the spring 9. The second spring receiving portion 21 extends through the guide hole 10a formed in the printed circuit board 10. In this state, the other end of the spring 9 is received in the second spring receiving portion 21.

In the second embodiment, the spring 9 may be replaced by any other elastic member. In this event, the second spring receiving portion 21 may be called a second elastic member receiving portion.

Third Embodiment

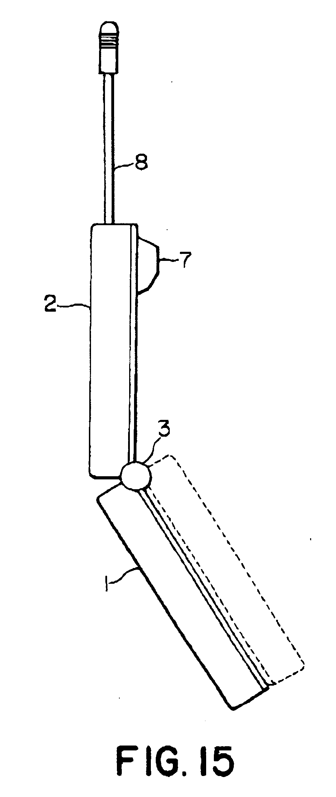

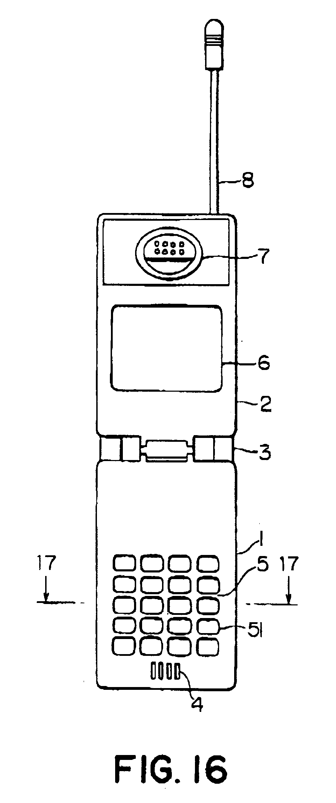

Referring to Figs. 15 and 16, a portable telephone set of a foldable type according to a third embodiment of this invention is characterized by an arrangement of the earphone unit 7 and the key portion 5. In this arrangement, when the lower and the upper housings 1 and 2 are rotated to fold the set, the earphone unit 7 is brought into contact at first with an internal area of the key portion 5. As described in the foregoing, when the lower and the upper housings 1 and 2 are folded, the contact point between the earphone unit 7 and the lower housing 1 is forced to move towards the hinge portion 3. If a plurality of the key pads 51 forming the key portion 5 protrude from the confronting surface of the lower housing 1 with a recess formed between the adjacent key pads, the earphone unit 7 is often caught in the recess between the key pads when the lower and the upper housings 2 are folded. As a consequence, the earphone unit 7 can not slide on the confronting surface of the lower housing 1, so that the folding operation cannot be completed.

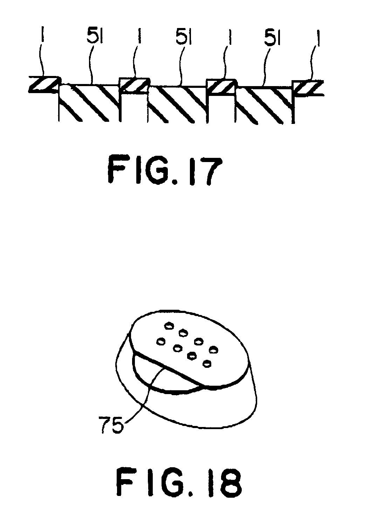

In order to resolve the above-mentioned problem, the portable telephone set of a foldable type according to the third embodiment of this invention has structures of the earphone unit 7 and the key portion 5 as illustrated in Figs. 17 and 18.

As will be understood from Figs. 14 and 15, the earphone unit 7 has a semi-elliptical plane formed between a side surface near the hinge portion 3 and the earphone unit top surface 72b. In other words, the earphone unit top surface 72b is chamfered.

Referring to Fig. 17, a plurality of the key pads 51 of the key portion 5 are shown in section taken along a line 17-17 in Fig. 16. As will be understood from Fig. 17, the key pads 51 are arranged inside, or at a lower level, with respect to the confronting surface of the lower housing 1. It is assumed that each key pad 51 has a width defined between segmented portions of the lower housing 1 in Fig. 17. It is sufficient that the key pads 51 are arranged inside with respect to the confronting surface of the lower housing 1 while the lower and the upper housings 2 are folded. Referring to Fig. 18, a protruding part of the earphone unit 7 is shown. As illustrated, the semi-elliptical plane defines a straight line 75 having a length which is selected to be larger than the width of the key pad 51. When the earphone unit 7 is brought into contact with the lower housing 1 in order to close the lower and the upper housings 1 and 2, the straight line 75 extends over the entire width of the key pad 51. Thus, it is possible to prevent the contact point between the earphone unit 7 and the lower housing 1 from being caught by the key pads 51.

Claims

1. A portable telephone set of a foldable type, comprising a first housing (1) with a microphone unit (4) contained therein; a hinge portion (3) supporting one side of said first housing (1); a second housing (2) having one side supported by said hinge portion (3) so that said second housing (2) is rotatable around said hinge portion (3) within a movable range defined by said hinge portion (3) to be unfolded and folded with respect to said first housing (1); an earphone unit (7) mounted in said second housing (2) to be exposed outside through a confronting surface of said second housing (2) to be faced to that of said first housing (1) when said first and said second housings (1, 2) are folded; and an antenna (8) fixed on a side surface of said second housing (2) that is located opposite to another side surface adjacent to said hinge portion (3), wherein said earphone unit (7) being retracted and received in said second housing (2) when said first and said second housings (1, 2) are folded, said earphone unit (7) partially projecting from said second housing (2) when said first and said second housings (1, 2) are unfolded.

2. A portable telephone set of a foldable type as claimed in claim 1, wherein said earphone unit (7) jumps up to a predetermined position when said first and said second housings (1, 2) are unfolded.

3. A portable telephone set of a foldable type as claimed in claim 2, wherein:

said earphone unit (7) has a unit axis extending in a direction perpendicular to said confronting surface of said second housing (2) when said earphone unit (7) jumps up from said second housing (2) to a maximum height;

said earphone unit (7) being supported so that said unit axis is able to incline within said second housing from the direction perpendicular to said confronting surface of said second housing (2) when said first and said second housings (1, 2) are being folded.

4. A portable telephone set as claimed in claim 1, 2 or 3, wherein said antenna (8) can be separated from the head of a user and extend substantially straight upward from the head when said portable telephone set is used.

5. A portable telephone set of a foldable type as claimed in claim 3 or 4, wherein said earphone unit (7) is brought into face-to-face contact with said first housing (1) when said first and said second housings (1, 2) are folded.

6. A portable telephone set of a foldable type as claimed in claim 3, 4 or 5, wherein:

said second housing (2) has a front wall having the confronting surface and a window (P2-P3) formed at a part of said front wall; said second housing (2) containing an elastic member (9) and a stopper (72a);

said earphone unit (7) being forced by elastic force of said elastic member (9) to jump up from said second housing (2) to said predetermined position and is stopped by said stopper (72a) with a part of said earphone unit (7) protruding out of said second housing (2).

7. A portable telephone set of a foldable type as claimed in claim 6, further comprising a plurality of said elastic members (9);

said earphone unit (7) having a plurality of elastic member receiving portions (72a) of a recessed shape;

said elastic member receiving portions (72a) receiving one ends of said elastic members (9), respectively.

8. A portable telephone set of a foldable type as claimed in claim 7, wherein said elastic member receiving portions (72a) also serve as said stopper.

9. A portable telephone set of a foldable type as claimed in claim 8, wherein each of said elastic members (9) is a spring.

10. A portable telephone set of a foldable type as claimed in claim 9, wherein:

said second housing (2) further contains a printed circuit board (10) therein;

said springs (9) having the other ends fixed to said printed circuit board (10) by soldering (9a).

11. A portable telephone set as claimed in any of claims 7 to 10, wherein:

said second housing (2) has a rear wall (22) opposite to said front wall;

said second housing (2) containing a printed circuit board (10) between said front and said rear walls;

said printed circuit board (10) having a plurality of guide holes (10a) corresponding to said elastic members (9), respectively;

said second housing (2) having a plurality of second elastic member receiving portions (21) of a recessed shape formed on an internal surface of said rear wall (22) in one-to-one correspondence to said guide holes (10a);

each of said second elastic member receiving portions (21) being inserted into each of said guide holes (10a) and receiving the other end of each elastic member (9) with its one end received in each of said elastic member receiving portion (72a).

12. A portable telephone set as claimed in any of claims 6 to 11, further comprising:

locking means (11) for preventing said first and said second housings (1, 2) from being undesiredly unfolded when said first housing (1) is pushed by said earphone unit (7) by elastic force of said spring (9) while said first and said second housings (1, 2) are folded;

said locking means (11) comprising:

first engaging means (11a) formed on a side surface of said first housing (1); and

second engaging means (11b) formed on a side surface of said second housing (2) to be engaged with said first engaging means (11a) when said first and said second housings (1, 2) are folded.

13. A portable telephone set of a foldable type as claimed in claim 12, wherein said second engaging means (11b) is a hook lever formed on the side surface of said second housing (2) that is provided with said antenna (8);

said first engaging means (11a) being a groove.

**14.** A portable telephone set of a foldable type as claimed in claim 13, wherein:

said second housing (2) has a generally semi-elliptical notch around said hook lever (11b);

said hook lever (11b) being rotated around one side of the top surface of said second housing (2) only when a part of said hook lever (11b) within said notch is applied with a pressing force towards said hinge portion (3).

**15.** A portable telephone set as claimed in any of claims 6 to 14, wherein when said earphone unit (7) is firstly brought into contact with the confronting surface of said first housing (1) at a first point (P1) on a top surface of said earphone unit (7) nearest to said hinge portion (3) during when said first and said second housings (1, 2) are being folded, the following two relationships are satisfied:

an angle B is 90° or more; and

another angle $\alpha$ is equal to or smaller than a half of an angle $\beta$,

where said angle B is made by the confronting surface of said first housing (1) and a first imaginary line (L1), said first imaginary line (L1) being a connection line extending from said first point (P1) to a second point (P2) which is a contact point between said remote side surface of said earphone unit (7) and the confronting surface of said second housing (2); said angle $\alpha$ is made by the top surface (72b) of said earphone unit (7) and the confronting surface of the first housing (1); and said angle $\beta$ is made by the near side of said earphone unit (7) and a second imaginary line (V2), said second imaginary line being a line extending in a direction perpendicular to the confronting surface of said second housing (2) from a third point (P3) which is a contact point between a near side surface of said earphone unit (7) near said hinge portion (3) and the confronting surface of said second housing (2).

**16.** A portable telephone set as claimed in any of claims 6 to 14, wherein when said earphone unit (7) is brought into contact with the confronting surface of said first housing (1) at a fourth point (P4) on the top surface (72b) of said earphone unit (7) farthest from said hinge portion (3) during when said first and said second housings (1, 2) are being folded, the following relationship is satisfied:

an angle E is equal to or larger than an angle of (90° - F/2),

where said angle E is formed by a near side surface of said earphone unit (7) nearer to said hinge portion (3) and the confronting surface of said second housing (2); and said angle F is made by the confronting surface of said first housing (1) and the top surface (72b) of said earphone unit (7).

**17.** A portable telephone set as claimed in any of claims 6 to 14, wherein when the earphone unit (7) is brought into face-to-face contact with the confronting surface of the first housing (1) in the overall top surface (72b) of said earphone unit (7) during when said first and said second housings (1, 2) are being folded, the following two relationships should be satisfied:

an angle D is equal to or larger than a half of another angle C; and

an angle E is 90° or more,

where, said angle C is made by the confronting surface of said first housing (1) and an imaginary line (L2) extending in parallel to the confronting surface of said second housing (2) from a point (P1) on a top surface of said earphone unit (7) nearest to said hinge portion; said angle D is made by a remote side surface of said earphone unit (7) remote from said hinge portion (3) and a line (V1) extending in a direction perpendicular to the confronting surface of said second housing (2) from a contact point (P2) between said remote side surface and the confronting surface of said second housing (2); and said angle E is formed by a near side surface of said earphone unit (7) nearer to said hinge portion (3) and the confronting surface of said second housing (2).

FIG. 1

**FIG. 2**

FIG. 3

FIG. 4

FIG. 5

FIG. 6

FIG. 7

FIG. 8

FIG. 9

FIG. 10

FIG. 11

FIG. 12

FIG. 13

FIG. 14

# FIG. 15

FIG. 16

**FIG. 17**

**FIG. 18**